## Europäisches Patentamt
## European Patent Office
## Office européen des brevets

(19)

(11) Veröffentlichungsnummer: **0 106 008**
**A1**

(12) # EUROPÄISCHE PATENTANMELDUNG

(21) Anmeldenummer: 83100956.8

(22) Anmeldetag: 02.02.83

(51) Int. Cl.³: **F 01 P 11/18**, G 01 F 23/06

(30) Priorität: 05.10.82 DE 3236809

(43) Veröffentlichungstag der Anmeldung: 25.04.84
Patentblatt 84/17

(84) Benannte Vertragsstaaten: DE FR GB IT NL SE

(71) Anmelder: **Verwaltungsgesellschaft Geiger Plastic GmbH & Co. KG, Breitenauer Strasse 1, D-8100 Garmisch-Partenkirchen (DE)**

(72) Erfinder: **Geiger, Albert, Maximilianshöhe 13, D-8100 Garmisch-Partenkirchen (DE)**

(74) Vertreter: **Huss, Carl-Hans, Dipl.-Ing. et al, Rathausstrasse 14, D-8100 Garmisch-Partenkirchen (DE)**

(54) **Kühlwasserbehälter aus thermoplastischem Material für Kraftfahrzeuge.**

(57) Bei einem Kühlwasserbehälter (37) aus thermoplastischem Material für Kraftfahrzeuge, mit einem Schwimmer (33), der mittels eines an ihm angebrachten Magneten (34) einen Reedschalter (41) auslöst, um das Unterschreiten eines ausreichenden Flüssigkeitsspiegels anzuzeigen, sind die beispielsweise als zylindrischer Dorn (35) ausgebildete Führung für den Schwimmer (36) und die Aufnahme für den Reedschalter (41) direkt in den unteren Behälterteil, z.B. dessen Boden eingeformt.

Die Aufnahme für den Reedschalter kann dabei aus einem Sackloch (42) im zylindrischen Dorn (35) bestehen.

Der größte Durchmesser des Schwimmers (33) ist kleiner als die lichte Weite der Einfüllöffnung (36) und sein Lösen vom zylindrischen Dorn (35) wird durch einen nietförmigen Anschlag (38) verhindert, dessen Schaft (39) in ein Sackloch (40) im oberen Teil des Dornes (35) eingepreßt ist.

Ein Kragen (43) umgibt das offene Ende der Aufnahme für den Reedschalter (41) und verhindert das Eindringen von Kriechwasser.

Der Permanentmagnet ist im oberen Teil des Schwimmers (33) vorgesehen und dessen Auftrieb so bemessen, daß sich der Permanentmagnet immer oberhalb des Wasserspiegels (44) befindet.

0106008

G 579 EU-He
Garmisch-Partenkirchen,
1. Februar 1983
He:Si

Verwaltungsgesellschaft
Geiger Plastic GmbH & Co. KG
Breitenauer Straße 1

8100 Garmisch-Partenkirchen

Kühlwasserbehälter aus thermoplastischem Material
für Kraftfahrzeuge

Die Erfindung betrifft Kühlwasserbehälter aus thermoplastischem Material, wie sie bei Kraftfahrzeugen vorgesehen sind, deren eigentlicher Kühler unterhalb des Kühlwasserspiegels im Zylinderblock sehr tief angeordnet ist, so daß ein direktes Füllen des Kühlers nicht möglich ist.

Wenn diese Kühlwasserbehälter, die, wie gesagt, dem Einfüllen und Ergänzen des Kühlwassers dienen, bei thermisch hochbelasteten Motoren mit entsprechend hoher Kühlwassertemperatur verwendet werden, ist die übliche Anzeige der Kühlwassertemperatur am Armaturenbrett nicht ausreichend, um Motorschäden infolge von Störungen im Kühlwasserkreislauf, hervorgerufen durch eine zu geringe Kühlwassermenge, zu verhindern. In den genannten

- 2 -

Kühlwasserbehältern ist daher eine Überwachungseinrichtung für den Kühlwasserstand vorgesehen, die im allgemeinen einen Reedschalter einschließt, der durch einen Magneten ausgelöst wird, der an einem auf der Kühlwasseroberfläche schwimmenden Schwimmer angebracht ist.

Die Führung für den Schwimmer und die Aufnahme für den handelsüblich in einem Glasröhrchen untergebrachten Reedschalter wurden bisher meist zu einem Bauteil zusammengefaßt, getrennt vom Kühlwasserbehälter gefertigt und nach Einsetzen von Schwimmer und Reedschalter in eine hierfür im Kühlwasserbehälter vorgesehene Öffnung unter Zwischenschaltung einer Dichtung von oben eingeschraubt.

Die nicht vorveröffentlichte DE 32 06 386 A1 beschreibt einen Bremsflüssigkeitsbehälter mit einem Füllstandsfühler in Form eines Reedschalters, der nicht wie üblich, in einem Glasröhrchen angeliefert, sondern direkt in einen hohlen rohrförmigen Abschnitt eingesetzt wird, der einstückig an der oberen Tankschale angeformt ist, und als Führung für den Schwimmer dient, wobei an einer der Tankschalen ein wärmeabschirmender Schürzenabschnitt angeformt sein muß, der den rohrförmigen Abschnitt und den Schwimmer umgibt, um sie vor der Wärme zu schützen, die beim Schweißen zum Verbinden der oberen Tankschale mit der unteren Tankschale auftritt.

Der Erfindung liegt die Aufgabe zugrunde, mit einer Niveauüberwachung versehene Kühlwasserbehälter dahingehend zu verbessern, daß ihre Herstellung vereinfacht und damit verbilligt und darüberhinaus auch noch die Betriebssicherheit der Überwachungseinrichtung erhöht wird.

0106008

- 3 -

Demnach betrifft die Erfindung einen Kühlwasserbehälter aus thermoplastischem Material, in dem ein Schwimmer mittels eines an ihm angebrachten Magneten einen Reedschalter auslöst, um das Unterschreiten eines ausreichenden Flüssigkeitsspiegels anzuzeigen, wobei der Behälter aus einem mit einem Unterteil verschweißten Oberteil besteht und die Führung für den Schwimmer und die Aufnahme für den Reedschalter einstückig mit dem entsprechenden Behälterteil hergestellt sind, der dadurch gekennzeichnet ist, daß die Führung für den Schwimmer und die Aufnahme für den Reedschalter im Unterteil des Kühlwasserbehälters vorgesehen sind und der Reedschalter erst nach dem Verschweißen der Behälterteile von unten in die Aufnahme eingesetzt wird.

Das offene Ende der Aufnahme für den in handelsüblicher Weise in einem Glasrohr untergebrachten Reedschalter kann von einem über die Oberfläche des Behälters vorspringenden Kragen umgeben sein, und der Auftrieb des Schwimmers sollte so bemessen sein, daß der von ihm getragene Permanentmagnet sich immer oberhalb des Flüssigkeitsspiegels befindet.

Durch die direkte Einformung der Führung für den Schwimmer und der Aufnahme für den Reedschalter in das Behälterunterteil entfällt die Bereitstellung einer eigenen Form und Maschine für die Herstellung eines entsprechenden Sonderteils sowie dessen Fertigung und seine Montage im Kühlwasserbehälter, woraus sich entsprechende, bei der Massenfertigung nicht unerhebliche Kosteneinsparungen ergeben.

- 4 -

Das Einsetzen des Reedschalters in den Behälter von unten und nach dem Verschweißen der Behälterteile vermeidet sowohl die Gefahr einer Beschädigung des Reedschalters durch die beim Verschweißen der Teile auftretende Hitze als auch die, daß beim Füllen oder Nachfüllen des Behälters Wasser an die Zuleitungsdrähte des Reedschalters gelangt und die Funktion beeinträchtigende Oxidationen hervorruft, was bisher auch bei Verwendung von Gummikappen zur Abdichtung der Reedschalteraufnahme nicht völlig verhindert werden konnte.

Der das offene Ende der Aufnahme für den Reedschalter umgebende Kragen wirkt ebenfalls in diesem Sinne und verhindert, daß überlaufendes Wasser, das bis in den Bodenbereich des Behälters entlang der Oberfläche gelangt, durch Kapillareffekte an die Zuführungsdrähte des Reedschalters kommt und dort die erwähnten Oxidationen und die sich als deren Folge ergebenden Störungen hervorrufen kann.

Durch die Maßnahme, daß sich der Permanentmagnet immer oberhalb des Wasserspiegels befindet, wird verhindert, daß im Kühlwasser mitgerissene magnetisierbare Teile sich am Permanentmagneten ansetzen und dadurch das Schwimmergewicht verändern, was zu einer unerwünschten Veränderung des den Reedschalter auslösenden Flüssigkeitsniveaus im Behälter führen würde. Dies kann noch dadurch verbessert werden, daß der Schwimmer in einer Schwimmerkammer untergebracht oder von einem Spritzwasserschutz umgeben ist, die Öffnungen für den Kühlwasserdurchtritt aufweisen.

0106008

- 5 -

Die Erfindung ist im folgenden unter Bezugnahme auf die Zeichnung anhand einiger Ausführungsformen näher erläutert. Es stellen dar:

Fig. 1 einen Schnitt durch einen erfindungsgemäßen Kühlwasserbehälter;

Fig. 2 einen Schnitt in Pfeilrichtung II der Fig. 1 gesehen;

Fig. 3 einen Schnitt durch eine abgewandelte Ausführungsform und

Fig. 4 einen Schnitt durch eine dritte Ausführung eines erfindungsgemäßen Kühlwasserbehälters.

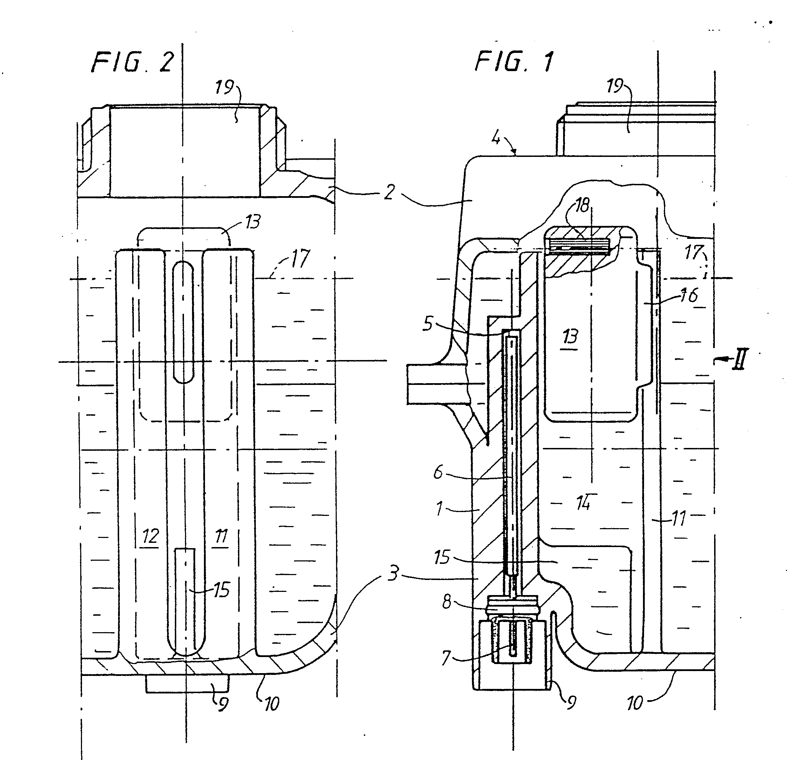

Gemäß den Fig. 1 und 2 ist ein im Bereich einer Seitenwand 1 des aus einem Oberteil 2 und einem Unterteil 3, die miteinander verschweißt sind, bestehenden Kühlwasserbehälters 4 sich von unten nach oben erstreckendes Sackloch 5 als Aufnahme für den Reedschalter 6 vorgesehen. Dieser weist an seinem kontaktseitigen Ende 7 eine wulstförmige Erweiterung 8 auf, die beim Einsetzen des Reedschalters in eine entsprechende Ringnut der Aufnahme 5 einschnappt.

Das offene Ende der Aufnahme für den Reedschalter ist von einem über die Oberfläche des Behälters vorspringenden Kragen 9 umgeben, der verhindert, daß überlaufendes Wasser, das entlang der Behälterwand 1 nach unten läuft, durch Kapillarwirkung in die Reedschalteraufnahme gelangt und Oxidationen der Kontakte und somit Störungen der Anzeige hervorruft.

Ausgehend vom Boden 10 des Behälters erstrecken sich zwei in der Aufsicht L-förmige Füh-

- 6 -

rungsteile 11 und 12 nach oben, die die Führung für den Schwimmer 13 bilden und zusammen mit der Seitenwand 1 eine Schwimmerkammer 14 begrenzen. Im unteren Teil der Schwimmerkammer 14 ist ein Schwimmeranschlag 15 vorgesehen.

Der Schwimmer 13 wird mittels einer aus einer seiner Seitenwände vorspringenden Leiste 16 im Zwischenraum zwischen den Teilen 11 und 12 geführt und in seinem oberen Teil ist oberhalb des Wasserspiegels 17 der den Reedschalter auslösende Permanentmagnet 18 vorgesehen. Er wird durch die Einfüllöffnung 19 für das Kühlwasser in die Schwimmerkammer 14 eingesetzt, und um dies zu ermöglichen ist sein größter Querschnitt kleiner als der der Einfüllöffnung 19.

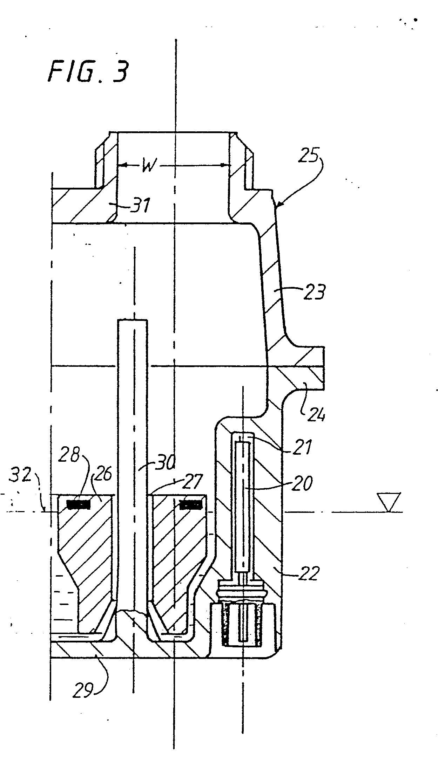

Die Alternative gemäß Fig. 3 unterscheidet sich hinsichtlich der Unterbringung des Reedschalters 20 in einem Sackloch 21 im Bereich der Seitenwand 22 des aus Oberteil 23 und Unterteil 24 bestehenden Kühlwasserbehälters 26, abgesehen vom Fehlen eines dem Kragen 9 entsprechenden Kriechwasserschutzes, nicht von der vorbeschriebenen Ausführungsform nach den Fig. 1 und 2.

Unterschiedlich dagegen ist die Führung für den Schwimmer 26, der ringförmig ausgebildet ist, in der Mitte ein Loch 27 aufweist und in seinem oberen Teil den Permanentmagneten 28 aufnimmt. Diese Schwimmerführung ist hier als vom Boden 29 ausgehender zylindrischer Dorn 30 ausgebildet, der das Loch 27 durchsetzt.

- 7 -

Weil bei der dargestellten Ausführungsform der Durchmesser des ringförmigen Schwimmers 26 größer ist als die lichte Weite W der Einfüllöffnung 31 muß der Schwimmer 26 auf den Dorn 30 aufgesetzt werden, bevor die Teile 23 und 24 miteinander verschweißt werden.

Auch hier ist der Auftrieb des Schwimmers 26 so bemessen, daß der Permanentmagnet 28 sich oberhalb des durch ein auf die Spitze gestelltes Dreieck gekennzeichneten Wasserspiegels 32 befindet und somit keine im Kühlwasser treibenden Metallrückstände anziehen kann. Gegebenenfalls kann der Schwimmer von einem (nicht dargestellten) der Schwimmerkammer 14 der Figuren 1 und 2 entsprechenden Spritzwasserschutz umgeben sein, der dem Zwischenraum zwischen den Teilen 11 und 12 der Figuren 1 und 2 ähnliche Öffnungen für den Kühlwasserdurchtritt aufweist.

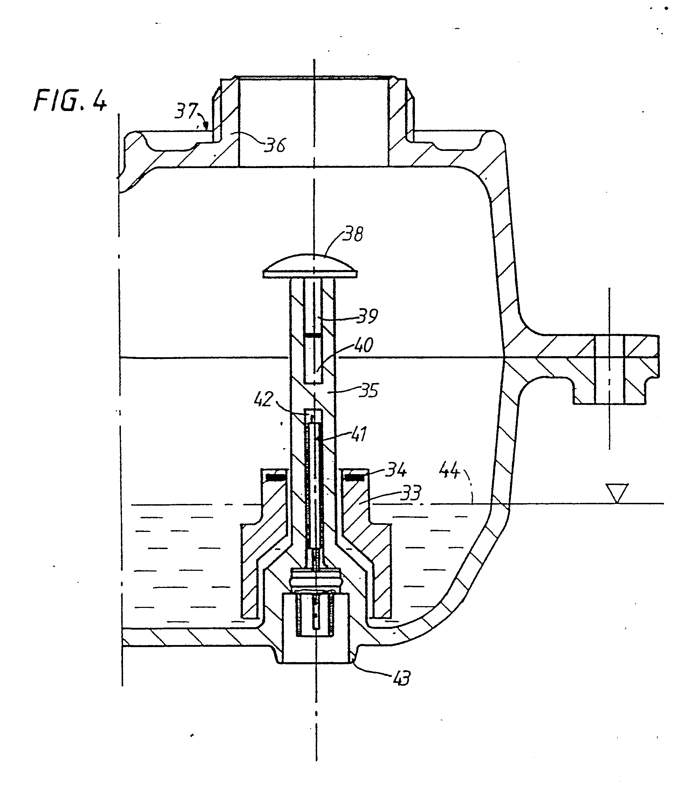

Eine besonders vorteilhafte Weiterentwicklung ist in Fig. 4 dargestellt.

Die Führung des ringförmigen Schwimmers 33 mit seinem Permanentmagneten 34 auf einem zylindrischen Dorn 35 entspricht praktisch der eben beschriebenen, wobei der größte Durchmesser des Schwimmers in diesem Fall wieder kleiner ist als die lichte Weite der Einfüllöffnung 36, so daß der Schwimmer nach Fertigstellung des Kühlwasserbehälters 37 durch diese eingesetzt und bei Bedarf auch ausgewechselt werden kann. Ein Abschwimmen des Schwimmers 33 vom Dorn 35 wird durch einen scheiben- oder nietförmigen Anschlag 38 verhindert, dessen Schaft 39 in ein Sackloch 40 im oberen Ende des Dornes 35 eingepreßt ist.

- 8 -

Abweichend von den bisher beschriebenen Ausführungsformen gemäß den Fig. 1 bis 3 ist hier jedoch der Reedschalter 41 nicht im Bereich einer Seitenwand des Behälters 37, sondern in einem weiteren axialen Sackloch 42 aufgenommen, das sich von unten her in den Dorn 35 erstreckt. Dies hat den Vorteil, daß Verformungen der in den Seitenwänden vorgesehenen Aufnahmen für den Reedschalter vermieden werden, die aufgrund thermischer Materialverspannungen durch das sehr heiße (bis zu 140° C) Kühlwasser in den Seitenwänden des Behälters auftreten können und unter Umständen die Zerstörung des in einem Glasröhrchen untergebrachten Schalters zur Folge haben, weil durch die rotationssymmetrische Gestalt des zylindrischen Dornes 35 und der entlang seiner Mittelachse verlaufenden Sacklöcher eine solche Verformung der Reedschalteraufnahme weitgehend vermieden wird.

Auch ein als Kriechwasserschutz dienender Kragen 43 am offenen Ende der Aufnahme für den Reedschalter 41 ist bei dieser Ausführungsform ebenso vorgesehen, wie die Anordnung des Permanentmagneten 34 im oberen Teil des Schwimmers 33, so daß er sich immer oberhalb des Wasserspiegels 44 befindet.

## Bezugszeichenaufstellung

### (Figuren 1 und 2)

| | |
|---|---|
| 1 | Seitenwand |
| 2 | Oberteil von 4 |
| 3 | Unterteil von 4 |
| 4 | Kühlwasserbehälter |
| 5 | Sackloch |
| 6 | Reedschalter |
| 7 | kontaktseitiges Ende von 6 |
| 8 | wulstförmige Erweiterung |
| 9 | Kragen |
| 10 | Boden von 4 |
| 11 | L-förmiges Führungsteil |
| 12 | L-förmiges Führungsteil |
| 13 | Schwimmer |
| 14 | Schwimmerkammer |
| 15 | Schwimmeranschlag |
| 16 | Leiste |
| 17 | Wasserspiegel |
| 18 | Permanentmagnet |
| 19 | Einfüllöffnung |

### (Figur 3)

| | |
|---|---|
| 20 | Reedschalter |
| 21 | Sackloch |
| 22 | Seitenwand |
| 23 | Oberteil von 25 |
| 24 | Unterteil von 25 |
| 25 | Kühlwasserbehälter |
| 26 | Schwimmer |
| 27 | Loch in 26 |
| 28 | Permanentmagnet |
| 29 | Boden von 25 |
| 30 | zylindrischer Dorn |
| W | lichte Weite von 31 |
| 31 | Einfüllöffnung |
| 32 | Wasserspiegel |

- 20 -

<u>(Figur 4)</u>

| 33 | Schwimmer |
| 34 | Permanentmagnet |
| 35 | zylindrischer Dorn |
| 36 | Einfüllöffnung |
| 37 | Kühlwasserbehälter |
| 38 | nietförmiger Anschlag |
| 39 | Schaft von 38 |
| 40 | Sackloch im oberen Ende von 35 |
| 41 | Reedschalter |
| 42 | Sackloch |
| 43 | Kragen |
| 44 | Wasserspiegel |

G 579 EU-He
Garmisch-Partenkirchen,
1. Februar 1983
He:Si

Verwaltungsgesellschaft
Geiger Plastic GmbH & Co. KG
Breitenauer Straße 1

8100 Garmisch-Partenkirchen

## Patentansprüche

1. Kühlwasserbehälter aus thermoplastischem Material für Kraftfahrzeuge, in dem ein Schwimmer mittels eines an ihm angebrachten Magneten einen Reedschalter auslöst, um das Unterschreiten eines ausreichenden Flüssigkeitsspiegels anzuzeigen, wobei der Behälter aus einem mit einem Unterteil verschweißten Oberteil besteht und die Führung für den Schwimmer und die Aufnahme für den Reedschalter einstückig mit dem entsprechenden Behälterteil hergestellt sind, dadurch g e k e n n z e i c h - n e t , daß die Führung (11,12;30;35) für den Schwimmer (13,26,33) und die Aufnahme (5,21,42) für den Reedschalter (6,20,41) im Unterteil (3,24) des Kühlwasserbehälters (4,25,37) vorgesehen und der Reedschalter (6,20,41) von unten in die Aufnahme (5,21,42) eingesetzt ist.

2. Kühlwasserbehälter nach Anspruch 1, dadurch g e k e n n z e i c h n e t , daß die Aufnahme (5, 21) für den Reedschalter (6,20) im Bereich einer Seitenwand (1,22) des Behälters (4,25) eingeformt ist.

3. Kühlwasserbehälter nach Anspruch 2, dadurch g e k e n n z e i c h n e t , daß die Führung (11, 12) für den Schwimmer (13) zusammen mit der Seiten-

- 2 -

wand (1), in die die Aufnahme (5) für den Reedschalter (6) eingeformt ist, eine Schwimmerkammer (14) bildet.

4. Kühlwasserbehälter nach Anspruch 1, dadurch g e k e n n z e i c h n e t , daß am oberen Ende der als zylindrischer Dorn (35) ausgebildeten Führung für den Schwimmer (33) ein scheiben- oder nietförmiger Anschlag (38) angebracht ist.

5. Kühlwasserbehälter nach Anspruch 1, dadurch g e k e n n z e i c h n e t , daß sich die Führung (11,12,35) für den Schwimmer (13,33) unterhalb der Einfüllöffnung (19,36) für das Kühlwasser befindet und der größte Querschnitt des Schwimmers (13,33) kleiner ist als der der Einfüllöffnung (19,36).

6. Kühlwasserbehälter nach Anspruch 1, dadurch g e k e n n z e i c h n e t , daß das offene Ende der Aufnahme (3,42) für den Reedschalter (6,41) von einem über die Oberfläche des Behälters (4,37) vorspringenden Kragen (9,43) umgeben ist.

7. Kühlwasserbehälter nach Anspruch 1, dadurch g e k e n n z e i c h n e t , daß der Auftrieb des Schwimmers (13,26,33) so bemessen ist, daß sich der Permanentmagnet (18,28,34) immer oberhalb des Wasserspiegels (17,32,44) befindet.

8. Kühlwasserbehälter nach Anspruch 4, dadurch g e k e n n z e i c h n e t , daß der Schwimmer (26,33) von einem der Schwimmerkammer (14) entsprechenden Spritzwasserschutz mit Öffnungen für den Kühlwasserdurchtritt umschlossen ist.

0106008

FIG. 2

FIG. 1

FIG. 3

FIG. 4

**Europäisches Patentamt**

# EUROPÄISCHER RECHERCHENBERICHT

0106008
Nummer der Anmeldung

EP 83 10 0956

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 709 940 (VOLKSWAGEN) <br> * Seite 4, Absätze 2,3 * | 1 | F 01 P 11/18 <br> G 01 F 23/06 |
| Y | FR-A-2 503 345 (VALEO) <br><br> * Seite 8, Zeile 1 - Seite 9, Zeile 29 * | 1,3,4, 6,7,8 | |
| A | GB-A- 442 025 (GIBSON) <br> * Seite 2, Zeile 75 - Seite 3, Zeile 93 * | 1 | |
| A | FR-A-2 466 002 (FERODO) <br> * Figur 10; Seite 11, Zeile 1 - Seite 12, Zeile 11 * | 1,2 | |

RECHERCHIERTE SACHGEBIETE (Int. Cl. 3)

F 01 P
G 01 F

Der vorliegende Recherchenbericht wurde für alle Patentansprüche erstellt.

| Recherchenort <br> DEN HAAG | Abschlußdatum der Recherche <br> 11-01-1984 | Prüfer <br> WASSENAAR G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82